# EUROPÄISCHE PATENTANMELDUNG

(11) **EP 2 495 653 A1**
(43) Veröffentlichungstag der Anmeldung: **05.09.2012**
(21) Anmeldenummer: 11156706.1
(22) Anmeldetag: 03.03.2011
(51) Int. Cl.: G06F 9/44

(54) **Verfahren für die Nutzung einer Variablen vom Datentyp Variant in einem Anwendungsprogramm einer industriellen Automatisierungskomponente**

(71) Anmelder: SIEMENS AKTIENGESELLSCHAFT, 80333 München (DE)
(72) Erfinder: Trapp, Lothar, 90537 Feucht (DE); Göddemeier, Ulrich, 76137 Karlsruhe (DE); Mössner, Rudolf, 93133 Burglengenfeld (DE); Opaterny, Thilo, 90453 Nürnberg (DE); Rupprecht, Georg, 90409 Nürnberg (DE); Schulz, Dietmar, 90574 Rosstal (DE)

(57) **Zusammenfassung**

Die Erfindung betrifft ein Verfahren für die Nutzung einer ersten Variablen eines varianten Datentyps, insbesondere einer Variant-Variablen, in einem Anwendungsprogramm einer industriellen Automatisierungskomponente. Dabei wird vorgeschlagen, die erste Variable zur Referenzierung einer zweiten Variablen eines elementaren Datentyps zu verwenden, wobei die erste Variable zur Laufzeit einen ersten Zeiger zu den Daten der referenzierten zweiten Variablen umfasst. Dabei wird im Zuge einer Erstellung des Programms eine Typinformation der Daten der mittels der ersten Variablen referenzierten zweiten Variablen ermittelt und in der Automatisierungskomponente gespeichert, wobei die erste Variable zur Laufzeit einen zweiten Zeiger zu der Typinformation der Daten der referenzierten zweiten Variablen umfasst, und wobei die Typinformation zur Laufzeit des Anwendungsprogramms mittels Zugriffsfunktionen der Automatisierungskomponente zugreifbar ist. Damit kann das Anwenderprogramm abhängig vom verwendeten Datentyp der zweiten Variable oder dem Parameter, der mit der ersten Variablen vom Datentyp Variant referenziert wird, ausgeführt werden.

## Beschreibung

Bei der Programmierung von mikroprozessorgesteuerten Geräten werden zumeist sog. Hochsprachen verwendet, wobei der durch einen Anwender geschriebene Programmcode (Source-Code) durch eine Übersetzungseinrichtung (Compiler) in einen sog. Maschinencode (Objekt-Code) übersetzt wird. Die Hochsprachen unterscheiden dabei zwischen verschiedenen Datentypen für Variablen, beispielsweise elementare Datentypen wie Integer, Real, String etc., Strukturen mit Komponenten vom unterschiedlichen Datentyp, Felder (Arrays) mit Elementen vom gleichen Datentyp etc. Weiterhin können die Variablen sowohl global definiert sein, als auch lokal für Unterprogramme und aufrufbare Funktionen.

Dies gilt auch für Automatisierungskomponenten in industriellen Automatisierungsanordnungen; diese Automatisierungskomponenten werden dabei auch als "CPU" oder "SPS" ("speicherprogrammierbare Steuerungen") bezeichnet. Die dabei von einem Hauptprogramm oder einer anderen übergeordneten Instanz aufrufbaren Unterprogramme und Funktionen werden hier oft als FC ("Funktion") und FB ("Funktionsbaustein") bezeichnet.

Die Automatisierungssysteme unterstützen neben den bereits bezeichneten Datentypen einen varianten Datentyp und erlauben es damit, dass eine Variable dieses Datentyps eine andere Variable eines beliebigen Datentyps ersetzen oder referenzieren kann. Dieser variante Datentyp wird im Folgenden mit "Variant" bezeichnet. Variablen vom Datentyp "Variant" werden dabei insbesondere als lokale Variablen in Unterprogrammen und Funktionen verwendet, wobei die an das Unterprogramm oder die Funktion übergebenen Parameter aus Variablen des aufrufenden Programms stammen können, wobei diese Variablen von einem beliebigen Datentyp sein können.

Es ist jedoch nicht ohne zusätzliche Parameter möglich, die an eine lokale Variable eines varianten Datentyps übergebenen Parameter hinsichtlich ihres Datentyps auszuwerten. D.h., dass Anwenderbausteine (FB's, FC's etc.) zwar die Werte der Parameter vom Datentyp Variant weiterreichen können, aber eine eigene Verwendung oft nur unter hohem Programmieraufwand möglich ist, weil der Datentyp der durch die Variable vom Typ Variant referenzierten Parameter nicht vom Programm selber bestimmt werden kann.

Es ist also eine Aufgabe der vorliegenden Erfindung, die Verwendung von Variablen eines varianten Datentyps zu vereinfachen.

Es ist ein zentraler Gedanke der Lösung der vorliegenden Aufgabe, dass während des Kompilierens des Anwendungsprogramms eine Datentypinformation über die jeweilige Variable des Typs "Variant" bzw. eine Datentypinformation über den Datentyp der über die Variable des Typs "Variant" jeweils referenzierten zweiten Variable zu erzeugen und auf der Automatisierungskomponente bzw. auf dem zu programmierenden Gerät zu hinterlegen. Dabei sollen, vorzugsweise über das Betriebssystem des zu programmierenden Gerätes, Funktionen zum Zugriff auf diese Informationen zur Verfügung gestellt werden, die einem Anwendungsprogramm den Datentyp und weitere Informationen über die Parameter bereitstellen können, die durch die Variable des Datentyps "Variant" jeweils referenziert sind.

Die Lösung der Aufgabe sieht insbesondere ein Verfahren gemäß dem Patentanspruch 1 vor. Dabei wird ein Verfahren für die Nutzung einer ersten Variablen eines varianten Datentyps in einem Anwendungsprogramm einer industriellen Automatisierungskomponente vorgeschlagen, wobei die erste Variable zur Referenzierung einer zweiten Variablen eines elementaren Datentyps verwendet wird, und wobei die erste Variable zur Laufzeit einen ersten Zeiger zu den Daten der referenzierten zweiten Variablen umfasst. Dabei wird im Zuge einer Erstellung des Programms eine Typinformation der Daten der mittels der ersten Variablen referenzierten zweiten Variablen ermittelt und in der Automatisierungskomponente gespeichert, wobei die erste Variable zur Laufzeit einen zweiten Zeiger zu der Typinformation der Daten der referenzierten zweiten Variablen umfasst, und die Typinformation zur Laufzeit des Anwendungsprogramms mittels Zugriffsfunktionen der Automatisierungskomponente zugreifbar ist. Damit kann das Anwenderprogramm abhängig vom verwendeten Datentyp der Variable oder dem Parameter, der mit der Variablen vom Datentyp Variant referenziert wird, ausgeführt werden. Der zweite Zeiger zur Typinformation wird nur für die Daten benötigt, welche durch einen "Variant" referenziert werden sollen und auch nur, solange diese referenziert werden. Werden diese Variablen hingegen gemäß dem Stand der Technik direkt angesprochen, hat der Compiler ohnehin eine Information über den Typ der Variablen, so dass dann keine Typinformation separat gespeichert werden muss.

Vorteilhafte Ausgestaltungen des erfindungsgemäßen Verfahrens sind in den abhängigen Patentansprüchen angegeben.

Vorteilhaft wird die Typinformation während der Erstellung des Anwendungsprogramms ("object code") mittels eines Compilers erfasst, wobei später zur Laufzeit des Programms bei der Zuweisung der zweiten Variablen zu der ersten Variablen bzw. bei der Referenzierung der zweiten Variablen durch die erste Variable der zweite Zeiger auf einen Speicherort der Typinformation eingestellt wird. Auf diese Weise wird die Erstellung von Funktionen, insbesondere Betriebssystemfunktionen, erleichtert, die zur Beschaffung bzw. Auswertung der Typinformationen gedacht sind. Diese Zugriffsfunktionen werden, wie gesagt, vorteilhaft von dem Betriebssystem der Automatisierungskomponente dem dort ablaufenden Anwendungsprogramm zur Laufzeit zur Verfügung gestellt. Alternativ kann jedoch auch, beispielsweise durch Einbinden einer dazu eingerichteten "Bibliothek", die entsprechende Funktionalität über das Anwendungsprogramm selbst realisiert werden.

Vorteilhaft wird als die zweite Variable eine Variable von elementarem Typ, ein Array aus Variablen eines elementaren Datentyps oder eine Struktur aus Variablen unterschiedlichen Datentyps verwendet. Es kann jedoch genauso als zweite Variable wiederum eine Variable vom Datentyp Variant verwendet werden, wobei die zweite Variable dann zumindest eine dritte Variable eines beliebigen Datentyps referenziert. Dann kann der Datentyp der durch die mittelbare Referenzierung der zumindest einen dritten oder weiteren Variablen durch die Zugriffsfunktion ermittelt werden. Diese dritte oder weitere Variable kann dann wiederum eine elementare Variable, ein Array eines beliebigen Datentyps oder eine Struktur aus Variablen verschiedener Datentypen sein, usw. Im Endeffekt können nahezu unbegrenzte Referenzierungsketten verwendet werden, wobei durch die erfindungsgemäßen Zugriffsfunktionen sichergestellt ist, dass der Datentyp der letztendlich über die Variable des Typs "Variant" referenzierten Informationen (Parameter) ermittelt bzw. ausgewertet werden kann.

Nachfolgend wird anhand eines Ausführungsbeispiels das erfindungsgemäße Verfahren erläutert.

Dem Anwendungsprogramm werden einige Funktionen bereit gestellt. Dies betrifft zunächst eine Abfrage, ob die referenzierte Variable elementar, ein Array oder eine Struktur ist, beispielsweise über Befehle "isElementary", "isArray", "isStruct". Neben diesen Befehlen, welche die Struktur der referenzierten Variablen abfragen können, ist eine weitere Abfrage zum elementaren Datentyp vorgesehen, beispielweise durch einen Befehl "TypeOf". Die Abfrage einer Speichergröße einer Variablen vom Datentyp Variant kann beispielsweise durch einen Befehl "SizeOf" erfolgen. Neben den zuvor beschriebenen Befehlen, die Informationen über den Datentyp bereitstellen, sind weitere Zugriffsbefehle vorgesehen, beispielsweise für die Extraktion eines Elements eines Arrays bzw. einer Komponente einer Struktur mittels des Befehls "ElementOf". Umgekehrt ist auch die Zuweisung eines solchen Extrakts an eine Variable vom Datentyp Variant vorgesehen, um den Datentyp dieses Elements zu bestimmen bzw. festzulegen. Selbstverständlich sind die vorgenannten konkreten Befehle, deren Namen und deren Syntax nur exemplarisch für die erfindungsgemäßen Zugriffsfunktionen auf den Datentyp und den Inhalt der Variablen.

Diese Funktionen lassen sich insbesondere auf Variablen vom Datentyp Variant selbst anwenden, auch wenn diese keine Parameter sind. Auch lassen diese Funktionen die iterative (rekursive) Auswertung auch komplexer Datentypen zu, was später anhand eines kurzen Ausführungsbeispiels (Pseudocode) gezeigt wird. Insbesondere können diese Funktionen auch auf Variablen vom Datentyp Variant angewendet werden, die ein sog. "Array of Byte" referenzieren. In diesem Fall kann der Datentyp des Ergebnisses der Funktion "ElementOf" vorgegeben werden. Aufgrund des damit vorgegebenen bzw. zugeordneten Datentyps wird dann das "Array of Byte" interpretiert.

Nachfolgend wird ein simples Beispiel in einem sog. "Pseudocode" für ein ausführbares Programm gezeigt. Dabei wird die Aufgabe erfüllt, dass ein Puffer interpretiert wird, der beispielsweise bis zu 10.000 Bytes enthalten kann. Dieser Puffer enthält Daten der nachfolgend beschriebenen Typ-Längen-Definition (TLV-Definition):
CountBytes:Uint; [TypeFlag: USInt (Int= 1, Real= 2), CountOf Elements:UInt, Values ]*
Zwei Ausgaben sollen dabei berechnet werden, nämlich "SumInt" als die Summe über alle enthaltenen ganzen Zahlen ("integer"), und "SumReal" als die Summe über alle enthaltenen Fließkommazahlen ("real numbers").

### Beispiel (Pseudocode):

```
 Var_Input B: Variant; End_Var
 Var_Output SumInt: LInt; SumReal: Real; End_Var
 Var_Temp i, j, n: UInt; Len:= UInt; End_Var;
 SumInt:= 0; SumReal:= 0.0; j:= 2;
 If not isArray(B) then Return; end_if;
 If TypeOf(ElementOf(B,0)) <> TypeOf (Byte) then Return;
 end_if;
 Len:= (Int)ElementOf(B,0); // count of bytes
 While j < Len do
  n := (UInt) ElementOf (B,j+1); j:= j + 3;
  case (USInt) ElementOf (B, j-3) of
  1:
    for i:= 0 to n-1 do
      SumInt:= SumInt + (Int)ElementOf(B,j); j:= j + 2;
    End_For;
  2:
    for i:= 0 to n-1 do
      SumReal:= SumReal + (Real)ElementOf (B,j); j:= j + 4;
    End_For;
  End_Case;
 End_While;
```

In diesem Beispiel werden die Befehle "isArray" und "TypeOf" zur Struktur- und Typbestimmung und der Befehl "ElementOf" für die Extraktion eines Elementes aus der referenzierten Struktur (hier: ein Array) verwendet.

## Patentansprüche

1. Verfahren für die Nutzung einer ersten Variablen eines varianten Datentyps in einem Anwendungsprogramm einer industriellen Automatisierungskomponente,
wobei die erste Variable zur Referenzierung einer zweiten Variablen eines elementaren Datentyps verwendet wird, und wobei die erste Variable zur Laufzeit einen ersten Zeiger zu den Daten der referenzierten zweiten Variablen umfasst, **dadurch gekennzeichnet,**
**dass** im Zuge einer Erstellung des Programms eine Typinformation der Daten der mittels der ersten Variablen referenzierten zweiten Variablen ermittelt und in der Automatisierungskomponente gespeichert wird, wobei die erste Variable zur Laufzeit einen zweiten Zeiger zu der Typinformation der Daten der referenzierten zweiten Variablen umfasst, und
**dass** die Typinformation zur Laufzeit des Anwendungsprogramms mittels Zugriffsfunktionen der Automatisierungskomponente zugreifbar ist.

2. Verfahren nach Patentanspruch 1,
**dadurch gekennzeichnet,**
**dass** die Typinformation bei der Erstellung des Anwendungsprogramms mittels eines Compilers erfasst wird, und
**dass** zur Laufzeit bei der Zuweisung der der zweiten Variablen zu der ersten Variablen der zweite Zeiger auf einen Speicherort der Typinformation eingestellt wird.

3. Verfahren nach einem der vorhergehenden Patentansprüche,
**dadurch gekennzeichnet,**
**dass** die Zugriffsfunktionen durch ein Betriebssystem der Automatisierungskomponente dem Anwendungsprogramm zur Laufzeit zur Verfügung gestellt werden.

4. Verfahren nach einem der vorhergehenden Patentansprüche,
**dadurch gekennzeichnet,**
**dass** als die zweite Variable eine elementare Variable, ein Array aus Variablen eines elementaren Datentyps oder eine Struktur aus Variablen unterschiedlichen Datentyps verwendet wird.

5. Verfahren nach einem der vorhergehenden Patentansprüche,
**dadurch gekennzeichnet,**
**dass** als die zweite Variable eine Variable eines varianten Datentyps verwendet wird, wobei die zweite Variable zumindest eine dritte Variable eines beliebigen Datentyps referenziert.

6. Verfahren nach Patentanspruch 5,
**dadurch gekennzeichnet,**
**dass** mittels mehrfacher Anwendung der Datentyp der durch mittelbare Referenzierung der zumindest einen dritten Variablen durch die Zugriffsfunktionen ermittelbar ist.

7. Verfahren nach Patentanspruch 5 oder 6,
**dadurch gekennzeichnet,**
**dass** die dritte Variable eine elementare Variable, ein Array eines beliebigen Datentyps oder eine Struktur aus Variablen verschiedener Datentypen ist.
